(19) Europäisches Patentamt
European Patent Office
Office européen des brevets

(11) **EP 2 057 106 B1**

(12) **EUROPÄISCHE PATENTSCHRIFT**

(45) Veröffentlichungstag und Bekanntmachung des Hinweises auf die Patenterteilung:
**27.06.2012 Patentblatt 2012/26**

(21) Anmeldenummer: **07786616.8**

(22) Anmeldetag: **08.08.2007**

(51) Int Cl.:
*C04B 38/00* (2006.01)    *C04B 35/443* (2006.01)
*C04B 35/043* (2006.01)    *C04B 35/66* (2006.01)

(86) Internationale Anmeldenummer:
**PCT/EP2007/006998**

(87) Internationale Veröffentlichungsnummer:
**WO 2008/025440 (06.03.2008 Gazette 2008/10)**

(54) **GEBRANNTES FEUERFESTES PRODUKT**

BAKED REFRACTORY PRODUCT

PRODUIT REFRACTAIRE CUIT

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **28.08.2006 DE 102006040270**

(43) Veröffentlichungstag der Anmeldung:
**13.05.2009 Patentblatt 2009/20**

(73) Patentinhaber: **Refractory Intellectual Property GmbH & Co. KG**
**1100 Wien (AT)**

(72) Erfinder: **LYNKER, Andreas**
**35457 Lollar (DE)**

(74) Vertreter: **Becker, Thomas et al**
**Patentanwälte**
**Becker & Müller**
**Turmstrasse 22**
**40878 Ratingen (DE)**

(56) Entgegenhaltungen:
WO-A-2004/048290    WO-A-2004/065323
WO-A-2007/006350    DE-A1- 10 054 125
DE-A1-102004 007 062

• CHEMICAL ABSTRACTS + INDEXES, AMERICAN CHEMICAL SOCIETY. COLUMBUS, US, 26. November 1990 (1990-11-26), XP000190114 ISSN: 0009-2258

**Beschreibung**

Die Erfindung betrifft ein gebranntes feuerfestes keramisches Produkt. Erfindungsgemäß fallen unter diesen Gattungsbegriff sowohl geformte wie ungeformte Produkte. Geformte Produkte sind solche, die eine definierte Form aufweisen, so dass sie beim Hersteller fertig konfektioniert werden können. Zu den geformten Produkten zählen: Steine (bricks), Ausgüsse (nozzles), Rohre (tubes), Stopfen (stoppers), Platten (plates) etc. Der Begriff ungeformte Produkte inkludiert solche, die meist beim Anwender aus einer entsprechenden Masse erstellt werden. Hierzu gehören Böden von Ofenaggregaten, die aus einer Masse gegossen werden, aber auch Reparaturmassen etc.

Die geformten Produkte können gebrannt oder ungebrannt zum Anwender geliefert werden. Wie die ungeformten Produkte so werden auch die geformten Produkte spätestens bei ihrer Verwendung gebrannt, indem sie mindestens bis zu Temperaturen, bei denen die Versatzkomponenten sintern, erhitzt werden.

In diesem Zusammenhang umfasst der Begriff refraktäres Versatz-Material sowohl Werkstoffe, die bereits feuerfeste Eigenschaften aufweisen, als auch Werkstoffe, die erst während/nach der Temperaturbehandlung (dem Brand) feuerfest werden.

Feuerfeste keramische Produkte der genannten Art sind seit langem in zahlreichen Ausführungsformen bekannt. Die Anforderungen an solche Produkte richten sich nach der jeweiligen Anwendung. Grundsätzlich wird eine hohe Temperaturbeständigkeit verlangt. Zur Auskleidung von Zement-Drehrohröfen genügen häufig Produkte, die bis zu 1.300° C temperaturbeständig sind. Feuerfeste keramische Produkte für metallurgische Anwendungen (Auskleidung von Schmelzgefäßen, Ausgüsse, Stopfen, Gasspülsteine, Schieberplatten etc.) weisen üblicherweise eine Temperaturbeständigkeit von mindestens 1.400 bis 1.700° C auf. Die Feuerfestigkeit von Produkten zur Auskleidung von Müllverbrennungsanlagen liegt üblicherweise zwischen 1300 und 1500° C. Eine Temperaturbeständigkeit von über 1.700° C wird beispielsweise für folgende Anwendungen verlangt: Glasschmelzwannen, Aggregate zur Herstellung und Behandlung von Metallschmelzen.

Weitere wesentliche Eigenschaftsmerkmale sind: Thermoschockbeständigkeit, Korrosionsverhalten, Gefügeelastizität, Druckerweichen, Gasdurchlässigkeit, Kaltdruckfestigkeit, gegebenenfalls auch nach Temperaturwechseln, Heißbiegefestigkeit.

Auch insoweit sind die spezifischen Produktanforderungen von den spezifischen Anwendungen abhängig. Beispielsweise für Produkte zur Auskleidung von Glasschmelzwannen gelten folgende Kriterien: Glaswannen werden meist mit großformatigen feuerfesten Steinen ausgekleidet (beispielsweise 1,0 x 0,5 x 0,5 m). Für diese Anwendung wird deshalb eine Verbesserung (Reduzierung) der Sprödigkeit neben einer geringen Korrosionsneigung angestrebt.

Die DE 100 54 125 A1 beschreibt einen Versatz zur Herstellung eines feuerfesten keramischen Produktes. Der Versatz enthält als wesentliche Komponente einen Schmelzphasenbildner, der bei Einsatztemperaturen von 700 bis 1.300° C eine Schmelze/Glasphase bildet. Diese Schmelzphase soll die offene Porosität des Produktes soweit wie möglich ausfüllen, um nach dem Brand ein möglichst dichtes Produkt zu erhalten.

Der Erfindung liegt die Aufgabe zugrunde, ein feuerfestes keramisches Produkt anzubieten, das auch für Hochtemperaturanwendungen (> 1.500° C, auch > 1.700° C) geeignet ist und neben der hohen Temperaturbeständigkeit möglichst viele der nachfolgenden Eigenschaften kumulativ aufweist: eine gute Thermoschockbeständigkeit, eine hohe Kaltdruckfestigkeit nach Temperaturwechseln, eine geringe Gasdurchlässigkeit. Es soll vorzugsweise in Aggregaten mit reduzierender und/oder oxidierender Atmosphäre einsetzbar sein.

Zur Lösung dieser Aufgaben wurden umfangreiche Versuche durchgeführt. Dabei wurden unter anderem folgende Erkenntnisse erzielt:

-  Neben der chemischen Zusammensetzung spielt vor allem das Gefüge des gebrannten Produktes eine entscheidende Rolle.
-  Der absolute Wert für die offene Porosität ist nicht entscheidend. Die Art und Ausbildung der Poren hat jedoch einen starken Einfluss auf die Produkteigenschaften. Durch die Auswahl spezifischer Versatzkomponenten und Korngrößen kann die Porosität ebenfalls gezielt beeinflusst werden.
-  Gleiches gilt für die Gefügeelastizität.
-  Die geforderten Eigenschaften werden durch ein Gefüge erreicht, welches neben groben Teilchen aus MgO eine aus feinteiligen (< 100 $\mu$m) Versatz-Komponenten resultierende Matrix auf Basis MA-(MgO · Al$_2$O$_3$) Spinell aufweist, wobei das Produkt insgesamt zu > 98 M-% aus MgO-Grobkorn plus MA-Spinellmatrix besteht.
-  Die Matrix soll ganz überwiegend, am besten vollständig, aus MA-Spinell bestehen. Allenfalls minimale Anteile an freien MgO-Teilchen werden erfindungsgemäß zugelassen. Deren Anteil sollte < 1,0 M.-%, am besten < 0,5 M.-% oder < 0,1 M.-%, bezogen auf die gesamte Matrix, betragen.
-  Der MA-Spinell der Matrix kann vorsynthetisiert Bestandteil des Versatzes sein. Vorteilhaft ist, wenn der Spinell anteilig beim Brand des Produktes in-situ gebildet wird. Dabei reagiert Aluminiumoxid (Al$_2$O$_3$) im Versatz mit dem MgO Feinkornanteil und/oder im Oberflächenbereich der MgO-Grobteilchen. Die Phasenneubildung (in-situ-Bildung von MA-Spinell) ist mit einer Volumenzunahme verbunden.
-  Die unterschiedliche thermische Dehnung und Kontraktion von MgO und MA-Spinell wird genutzt, spaltartige Hohlräume zwischen beiden Gefügephasen auszubilden.
-  Die offene Porosität wird innerhalb der feinteiligen Matrix und durch die spaltartigen Poren um die Grobteilchen herum bestimmt. Die Poren laufen an den grobkörnigen (weitestgehend dichten) MgO-Teilchen aus.

- Der Anteil an MgO-Grobkorn sollte über 50 M.-% betragen, beispielsweise 52 bis 60 M.-%. Den Rest bildet überwiegend die Matrix aus MA-Spinell.
- Die Produkteigenschaften können durch eine Kornlücke zwischen MgO-Grobkorn und den Feinkorn-Bestandteilen des Versatzes beeinflusst werden. Das MgO-Grobkorn kann in einer Korngröße > 0,5 mm aber auch > 1 mm im Versatz eingesetzt werden. Die Bestandteile, die die Matrix bilden sollen, werden überwiegend ($d_{90}$) < 100um eingesetzt, oft auch < 50$\mu$m. Die Korngröße verändert sich beim Brand kaum. Es kommt jedoch zur Sinterung und damit zur Verbindung von kleineren Einzelkörnern oder der Ausbildung von Brücken zwischen den Versatz-Teilchen. Durch Spinellbildung an der Kornoberfläche "wächst" das Korn etwas.

In ihrer allgemeinsten Ausführungsform betrifft die Erfindung ein gebranntes feuerfestes Produkt mit den Merkmalen des Anspruchs 1. Die Poren (Abstand zwischen Grobkorn und umgebender Spinell-Matrix) sollen sich nach einer Ausführungsform über mehr als 50% der jeweiligen Grobkorn-Oberfläche erstrecken. Dieser Wert kann auf 60%, 70%, 75%, 80%, 90% erhöht werden. Konkret bedeutet das, dass ein MgO-Grobkorn mit einer Oberfläche X maximal zu 0,5X in Kontakt mit dem umgebenden Matrixmaterial steht. Die spaltartigen Poren, die sich entlang der Oberfläche der MgO-Grobkörner erstrecken, machen nach einer Ausführungsform maximal 1/20 des Volumenanteils der MgO-Grobkörner aus. Der Wert kann auf 1/30, 1/50, 1/70 oder 1/100 reduziert werden, wobei Mindestwerte bei 1/100, 1/80, 1/60, 1/40 oder 1/25 liegen können.

Das Produkt besteht bis auf technisch bedingte "Verunreinigungen" zu mindestens 98, besser > 99 M.-% aus MgO-Grobkorn plus MA-Spinellmatrix. Der $SiO_2$-Gehal liegt am besten < 1.5 M.-% oder < 0,5 M.-%. Dadurch wird die Bildung von Magnesium-Aluminium-Silikaten weitestgehend unterbunden.

Ein solches Produkt kann aus einem Versatz hergestellt werden, der neben MgO-Grobkorn mit einer Korngröße $d_{90}$ > 300 $\mu$m mindestens eine feinteilige Komponente mit einer Korngröße $d_{90}$ < 100 $\mu$m aus der Gruppe $Al_2O_3$ (beziehungsweise $Al_2O_3$ + MgO) und/oder vorsynthetisiertem MA-Spinell umfasst.

Es hat sich als günstig herausgestellt, wenn der Anteil an Sekundärspinell, also Spinell, der erst beim Brennen des Produkts gebildet wird, mindestens 10 M.-%, bezogen auf das Gesamtprodukt, beträgt. Das heißt, dass der entsprechende Versatz neben einem vorsynthetisierten MA-Spinell (als Bestandteil der feinteiligen Komponente) $Al_2O_3$ enthält, welches mit MgO (beispielsweise dem der MgO-Grobkörner) reagieren kann, oder eine Mischung aus feinteiligem $Al_2O_3$ und MgO (anteilig) zur unmittelbaren in-situ-Bildung von MA-Spinell eingesetzt wird.

Anteile von freiem, feinteiligem $Al_2O_3$ im Versatz haben weiters den Vorteil, dass etwaige unerwünschte Anteile an freiem MgO insbesondere innerhalb der Feinkornkomponente, beim Brand in MA-Spinell umgewandelt werden.

Insoweit strebt die Erfindung ein gebranntes Produkt an, das - mit Ausnahme des MgO-Grobkorns - im technischen Maßstab frei von freiem MgO ist. In jedem Fall soll der entsprechende Anteil innerhalb der feinteiligen Matrix so begrenzt sein, dass er, bezogen auf das Gesamtprodukt, < 1,0 M.-% beträgt.

Auch freies Aluminiumoxid im Gefüge des gebrannten Produktes soll so weit wie möglich vermieden werden.

Das beschriebene gebrannte Produkt macht das MgO-Grobkorn zur wesentlichen Komponente in Hinblick auf die verbesserte Duktilität des Produktes, dessen Kaltdruckfestigkeit (gemäß EN 993-5) > 50 MPa betragen kann. Dies ist umgekehrt zu herkömmlichen MA-Spinell-Steinen, bei denen das Spinellkorn die eigentliche Flexibilität des Gefüges hervorruft. Das MgO-Grobkorn ist auch positiv für die Verarbeitung des Versatzes. Beispielsweise ist der Verschleiß von Pressformen bei der Verwendung des erfindungsgemäßen Versatzes im Vergleich zu Versätzen mit einem harten MA-Spinell-Grobkorn deutlich geringer.

Im Gegensatz zur Lehre der DE 100 54 125 A1 werden Poren erfindungsgemäß nicht über erhöhte Anteile an Schmelzphase verfüllt, im Gegenteil: die spaltartigen Poren zwischen den beiden Gefügephasen sind ganz wesentlich für die Produkteigenschaften. Bei 1500°C sollen erfindungsgemäße Produkte < 5% Schmelzphase bilden.

Die in einer Spinellmatrix liegenden MgO-Körner machen das Gefüge so flexibel, dass entsprechende Produkte, wie Steine, auch in rotierenden Öfen, wie sie beispielsweise zur Zementherstellung verwendet werden, eingesetzt werden können.

Andere Verwendungsmöglichkeiten sind:

- Steine für die Auskleidung von Glasschmelzwannen
- Steine (wie Topfsteine) für den Einsatz in Regeneratoren von Glaswannen, insbesondere in der Sulfatkondensationszone solcher Regeneratoren, insbesondere bei reduzierenden Bedingungen.

Die gesamte offene Porosität des gebrannten Produktes beträgt üblicherweise < 20 Vol.-%, häufig < 17 Vol.-%, kann aber auch 15 Vol.-% liegen (bestimmt nach EN 993 Teil 1).

Die für das Gefüge eines erfindungsgemäßen Produktes wesentlichen spaltartigen Poren definieren einen Porenraum/Porenhof um die groben MgO-Körner herum, zwar nicht komplett, aber über erhebliche Anteile der jeweiligen Grobkorn-Oberfläche.

Als MgO-Grundstoff kann beispielsweise eine synthetische Sintermagnesia verwendet werden, aber auch Schmelzmagnesia oder aus Naturmagnesit gebranntes MgO. Das MgO-Grobkorn (die Partikel der zweiten Gefügephase) weisen regelmäßig eine Korngröße < 8mm, meist < 6mm auf, häufig auch < 4mm auf.

Das gebrannte Produkt sollte im Wesentlichen über die beiden Gefügephasen und die dazwischen liegenden Poren charakterisiert sein. Entsprechend sollte der Versatz darüber hinausgehende Komponenten in möglichst geringen Anteilen enthalten, üblicherweise < 3 Masse-%.

Die Verarbeitung des Versatzes erfolgt konventionell, beispielsweise mit einem temporären Bindemittel (wie einer Ligninsulfonatlösung). Die Mischung wird dann zu Steinen gepresst, getrocknet und beispielsweise bei 1500-1600°C gebrannt.

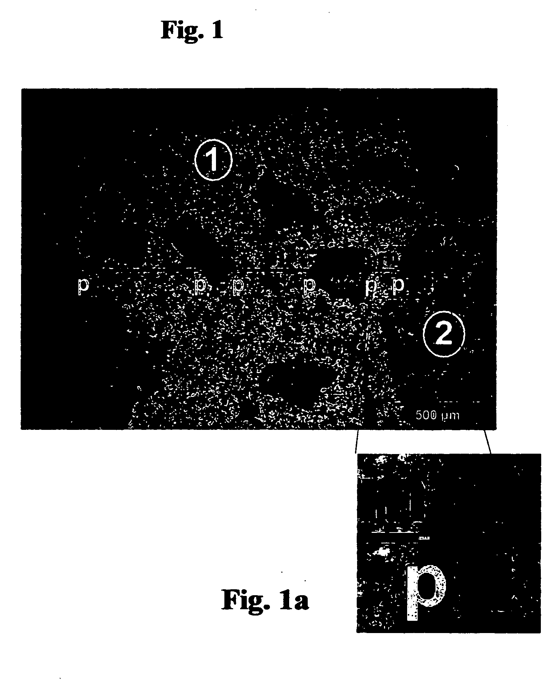

Ein typisches Gefügebild eines erfindungsgemäßen Produkts zeigt Fig. 1, einschließlich der markierten Ausschnittsvergrößerung (Fig. 1a).

Mit 1 (bzw. m) ist die Gefügephase 1, also die MA-Spinell-Matrix gekennzeichnet, mit 2 (bzw. k) die groben MgO-Körner (= 2. Gefügephase). Die Spinellmatrix wurde aus feinteiligen Versatzkomponenten beim Brand gebildet. Das Gefüge enthält ca. 10 M.-% Sekundärspinell, der erst beim Brand gebildet wurde.

Die groben MgO-Körner sind über große Bereiche ihrer Oberfläche durch dreidimensionale spaltartige Poren (p) von der umgebenden Matrix getrennt. Diese Poren wurden durch unterschiedliches thermisches Dehnungsverhalten der Gefügephasen und die in-situ Spinellbildung während des Produktbrands gebildet. Fig. 1 zeigt auch das Prinzip der angewandten Methode zur Bestimmung der Gefügeanteile mittels Auflichtmikroskopie. Die in Radex-Rundschau 1988, Heft 4, Seiten 172-182 beschriebene Methode erlaubt die Ermittlung von Volumenanteilen verschiedener Gefügephasen mit der Linienschnittmethode. In Fig. 1 ist eine solche Linie eingezeichnet und zeigt, dass an nahezu allen Oberflächen der MgO-Grobkörner solche Poren (p) vorhanden sind. Die konkrete Auswertung erfolgt folgendermaßen: Der Anschliff wird mit beliebig gewählten Messlinien überlagert. Entlang dieser Linien werden die Sehnenlängen der geschnittenen Phasen, Korn (k), Poren-/Porenhof (p) und Matrix (m), gemessen. Der Volumenanteil einer Phase entspricht dem Anteil der Messlinien innerhalb einer Phase an der gesamten Messlinie, siehe auch Gleichung [1]:

$$\boxed{V_x = (\textstyle\sum L_x)/L_{ges}} \quad [1]$$

$V_x$ ...    Volumenanteil der Phase x in [Vol.%]
x ...    Phase: Korn k, Porenhof p, Matrix m
$L_x$ ...    Sehnenlänge innerhalb der Phase x
$L_{ges}$ ..    Gesamtlänge der Messlinie

Für eine repräsentative und reproduzierbare Auswertung sollten 50 bis 100 Linien pro Anschliff ausgewertet werden, wobei die Linien in unterschiedlichen Richtungen verlaufen. Darüber hinaus sollten mindestens drei Anschliffe in drei unterschiedlichen Richtungen des Koordinatensystems zugrunde gelegt werden. Die Volumenanteile der Gefügephasen und Poren ergeben sich aus der Mittelwertberechnung der so erhaltenen Einzeldaten.

**Patentansprüche**

**1.** Gebranntes feuerfestes Produkt, das bei Anwendungstemperaturen bis 1500°C weniger als 5 M.-% Schmelzphase bildet, dessen Gefüge aus einer MA-Spinell-Matrix (1. Gefügephase) besteht, in der MgO-Grobkörner mit einer Teilchengröße $d_{90}$ > 300μm (2. Gefügephase) vorliegen, wobei das Produkt zu > 98 M-% aus MgO-Grobkorn plus MA-Spinellmatrix besteht und wobei zwischen den beiden Gefügephasen dreidimensionale spaltartige Poren ausgebildet sind.

**2.** Produkt nach Anspruch 1, bei dem sich die spaltartigen Poren über mehr als 50% der Oberfläche des MgO-Grobkorns erstrecken.

**3.** Produkt nach Anspruch 1, bei dem die spaltartigen Poren maximal 1/20 des Volumenanteils des MgO-Grobkorns umfassen.

**4.** Produkt nach Anspruch 1, mit einer offenen Porosität bis zu 20 Vol-%.

**5.** Produkt nach Anspruch 1, mit einer Kaltdruckfestigkeit > 50 MPa.

**6.** Produkt nach Anspruch 1, bei dem der Anteil der MgO-Grobkörner über 50 M.-% beträgt.

**7.** Produkt nach Anspruch 1, bei dem der Anteil der MgO-Grobkörner zwischen 60 und 80 M.-% beträgt.

**8.** Produkt nach Anspruch 1, mit einer Teilchengröße $d_{90}$ der MgO-Grobkörner > 500 μm.

**Claims**

**1.** Fired refractory product which at application temperatures of up to 1500°C forms less than 5 % by mass of a melt phase, the structure of which comprises an MA spinel matrix (1st structural phase) in which MgO coarse grains with a particle size of $d_{90}$ > 300 μm (2nd structural phase) are present, wherein the product comprises > 98 % by mass MgO coarse grains plus MA spinel matrix and wherein three-dimensional crack-like pores are formed between the two structural phases.

**2.** Product according to claim 1, in which the crack-like pores extend over more than 50% of the surface of the MgO coarse grain.

**3.** Product according to claim 1, in which the crack-like pores comprise maximum 1/20 of the volume content of the MgO coarse grain.

**4.** Product according to claim 1, with an open porosity of up to 20 %v/v.

**5.** Product according to claim 1, with a cold crushing strength of $\geq$ 50 MPa.

**6.** Product according to claim 1, in which the content of the MgO coarse grains is over 50 % by mass.

**7.** Product according to claim 1, in which the content of the MgO coarse grains is between 60 and 80 % by mass.

**8.** Product according to claim 1, with a particle size $d_{90}$ of the MgO coarse grains of > 500 $\mu$m.

**Revendications**

**1.** Produit réfractaire calciné formant, à des températures de mise en oeuvre inférieures ou égales à 1500 °C, moins de 5 % en masse de phase fondue, sa structure étant constituée d'une matrice de type MA-spinelle (1<sup>ère</sup> phase structurelle) dans laquelle de gros grains de MgO avec une taille de particules $d_{90}$ > 300 $\mu$m (2<sup>ème</sup> phase structurelle) sont présents, et des pores tridimensionnels ressemblant à des fentes étant formés entre les deux phases structurelles.

**2.** Produit selon la revendication 1, chez lequel lesdits pores ressemblant à des fentes s'étendent sur plus de 50 % de la surface dudit gros grain de MgO.

**3.** Produit selon la revendication 1, chez lequel lesdits pores ressemblant à des fentes comprennent au maximum 1/20 de la proportion volumique du gros grain de MgO.

**4.** Produit selon la revendication 1, avec une porosité ouverte inférieure ou égale à 20 % en volume.

**5.** Produit selon la revendication 1, avec une résistance à la compression à froid $\geq$ 50 MPa.

**6.** Produit selon la revendication 1, chez lequel la proportion des gros grains de MgO est supérieure à 50 % en masse.

**7.** Produit selon la revendication 1, chez lequel la proportion des gros grains de MgO est comprise entre 60 et 80 % en masse.

**8.** Produit selon la revendication 1, avec une taille de particules $d_{90}$ des gros grains de MgO > 500 $\mu$m.

**Fig. 1**

**Fig. 1a**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10054125 A1

**In der Beschreibung aufgeführte Nicht-Patentliteratur**

- **RADEX-RUNDSCHAU.** *Heft,* 1988, vol. 4, 172-182